# EUROPÄISCHE PATENTSCHRIFT

(11) **EP 1 306 577 B1**
(45) Veröffentlichungstag und Bekanntmachung des Hinweises auf die Patenterteilung: **30.11.2005**
(21) Anmeldenummer: 02019627.5
(22) Anmeldetag: 03.09.2002
(51) Int. Cl.: F16F 15/027, F16F 15/02

(54) **Verfahren zur Steuerung eines Aggregatlagers**
Method for controlling a unit support
Méthode de commande d'un support d'unité

(30) Priorität: 12.10.2001 DE 10150608
(43) Veröffentlichungstag der Anmeldung: 02.05.2003
(73) Patentinhaber: Bayerische Motoren Werke Aktiengesellschaft, 80809 München (DE)
(72) Erfinder: Lischka, Christof, 85774 Unterföhring (DE); Roetsch, Karl, 85229 Markt Indersdorf (DE)

(56) Entgegenhaltungen:
- EP-A- 1 306 578
- DE-A- 19 729 980
- SE-A- 8 901 690
- US-A- 3 483 951

## Beschreibung

Die Erfindung bezieht sich auf ein Verfahren zur Steuerung eines Aggregatlagers nach dem Oberbegriff des Anspruchs 1.

Aus der DE 197 29 980 A1 ist ein solches Verfahren bekannt, bei dem die Federrate der Aggregatlager zum Dämpfen von bestimmten Schwingungszuständen des Aggregats veränderbar ist.

Dazu wird das niederfrequente Schwingungsverhalten des Systems durch eine kurzzeitige Verstimmung infolge Änderung der Federsteifigkeit so beeinflusst, dass ein Einschwingen infolge von Fahrbahnanregungen verhindert wird, ohne das akustische Übertragungsverhalten spürbar zu verschlechtern. Damit wirkt sich dieses Verstellsystem sowohl positiv auf den Leerlauf, als auch den Fahrbetrieb aus.

Allerdings können, bei einer erforderlichen Federratenänderung in einem Bereich vom Fünffachen der Grundsteifigkeit innerhalb eines Zeitraumes von weniger als 10 ms, bei ungünstigem Verlauf der Steifigkeitskurve über der Zeit, sehr hohe Kraftspitzen entstehen, die als störende, klopfende Geräusche im Fahrzeuginneren hörbar werden.

Deshalb ist es Aufgabe der Erfindung, ein Verfahren zur Ansteuerung eines Aggregatlagers bereitzustellen, bei dem durch eine gezielte Auslegung der Steifigkeitskurve über der Zeit die störenden Kraftspitzen soweit reduziert werden können, dass sie akustisch nicht mehr wahrnehmbar sind.

Diese Aufgabe wird erfindungsgemäß mit den Merkmalen des Anspruchs 1 gelöst. Weitere Ausgestaltungen der Erfindung ergeben sich aus den Unteransprüchen.

Die Erfindung stellt ein Verfahren bereit, zur Ansteuerung eines Aggregatlagers, dessen Federrate vorrangig auf die Isolation der von einem Aggregat erzeugten Schwingungen abgestimmt ist. Mit einer Einrichtung zur Veränderung der Federrate wird ein Einschwingen einer niederfrequenten Eigenschwingung des Aggregats verhindert. Das Verfahren ist dadurch gekennzeichnet, daß die Federrate während einer bestimmten Zeitdauer, die einem Viertel der Schwingungsdauer der Eigenschwingung des Aggregats entspricht, so verändert wird, dass die Lagersteifigkeit, innerhalb von höchstens zehn Millisekunden, von einer Grundsteifigkeit mit einer bestimmten Federrate stetig bis zu einer Maximalsteifigkeit mit einer maximalen Federrate ansteigt und anschließend stetig so abfällt, dass die Grundsteifigkeit mit der bestimmten Federrate nach der bestimmten Zeitdauer erreicht wird, wobei der Zeitpunkt an dem die Veränderung der Federrate beginnt, einem Nulldurchgang der niederfrequenten Eigenschwingung entspricht.

Bei diesem Verfahren wird der erforderliche Steifigkeitsverlauf für die periodische Steifigkeitsänderung des Aggregatlagers aus den Schwingungsparametem Frequenz bzw. Schwingzeit, Amplitude und dem Nulldurchgang, der Phase, ermittelt. Das Auftreten der sogenannten Stuckerschwingungen kann aus dem Verfolgen der Bewegung des Aggregats, zum Beispiel mittels eines Beschleunigungsaufnehmers, anhand der Überschreitung eines vorgegebenen Grenzwertes A_{G1} von Schwingweg, Schwinggeschwindigkeit oder Schwingbeschleunigung erkannt werden. Die niederfrequente Stuckerschwingung kann also einmal erfasst und gemessen werden. Daraus ergeben sich dann die Parameter zur Ansteuerung des Aggregatlagers. Dazu werden folgende Größen bestimmt bzw. errechnet: Die Frequenz f bzw. die Schwingzeit T=1/f, die Zeitpunkte des Nulldurchganges des Schwingweges tₓ=t₀+n*T/2 und die aktuelle Amplitude A von Weg oder Beschleunigung.

Aus diesen Größen kann dann der ideale Steifigkeitsverlauf berechnet und zum nächsten Nulldurchgang durch die Regeleinrichtung umgesetzt werden. Durch ständigen Vergleich der aktuellen Amplitude A mit einem zweiten Grenzwert A_{G2} kann der Zeitpunkt erfasst werden, an dem die periodische Steifigkeitsverstellung wieder eingestellt wird.

Bei einer vorteilhaften Weiterbildung des Verfahrens wird dieses beim Auftreten von niederfrequenten Eigenschwingungen des Aggregates, von denen mindestens eine einen vorgegebenen Grenzwert überschreitet, aktiviert und dann deaktiviert, wenn alle niederfrequenten Eigenschwingungen des Aggregates einen weiteren vorgegebenen Grenzwert unterschreiten.

Bei einer bevorzugten Weiterbildung des Verfahrens wird die Veränderung der Federrate bezogen auf den niederfrequenten Eigenschwingungsverlauf periodisch oder stochastisch wiederholt.

Anspruchs 4 beschreibt einen bevorzugten Anwendungsfall der Erfindung. Das Aggregatlager ist hier als Motorlager in einem Kraftfahrzeug ausgebildet und zur Isolation der freien Gas- und Massenkräfte des Motors, in der Regel einer Brennkraftmaschine, entsprechend weich ausgelegt. Neben diesen motorbedingten Vibrationen führt der Motor auch niederfrequente Bewegungen (Stuckerschwingungen) mit der Eigenfrequenz der Motorlagerung (ca. 5 bis 15 Hz) aus, die beispielsweise auf Fahrbahnanregungen zurückgehen. Durch das erfindungsgemäße Verfahren zur Verhinderung des Einschwingens einer niederfrequenten Eigenschwingung (Stuckerschwingung) des Antriebsaggregates eines Kraftfahrzeuges kann wirkungsvoll der Ausbildung von Stuckerschwingungen entgegengewirkt werden.

Anwendbar ist dieses Prinzip vorzugsweise für Aggregatlagerungen von Kraftfahrzeugen, aber auch für andere Lagerungsfälle mit hohen Anforderungen hinsichtlich Schwingungskomfort, Laufruhe bzw. Akustik. Beispiele hierfür sind Lagerungssysteme für Schiffe, Schienenfahrzeuge, Luftfahrzeuge oder stationäre Maschinen bzw. Antriebe, zum Beispiel Kompressoren, Waschmaschinen, Werkzeugmaschinen, Fördermaschinen etc.. Es dient der Verbesserung des Akustik- und Schwingungskomforts in allen Betriebszuständen der Aggregate.

Das erfindungsgemäße Verfahren ist nachfolgend in der Zeichnung anhand möglicher Abläufe dargestellt und näher erläutert. Es zeigen:
- Figur 1: in schematischer Darstellung die Anordnung eines Antriebsaggregates in einem Kraftfahrzeug,
- Figur 2: eine schematische Darstellung eines Aggregates, das mittels einer Fe-, der mit veränderbarer Federrate gelagert ist,
- Figur 3: den Schwingungsverlauf der Eigenschwingung des Aggregates von Figur 2 und
- Figur 4: den zeitlich daran gekoppelten Verlauf der Federrate des Lagers von Figur 2 bei einer Ansteuerung nach dem erfindungsgemäßen Verfahren.

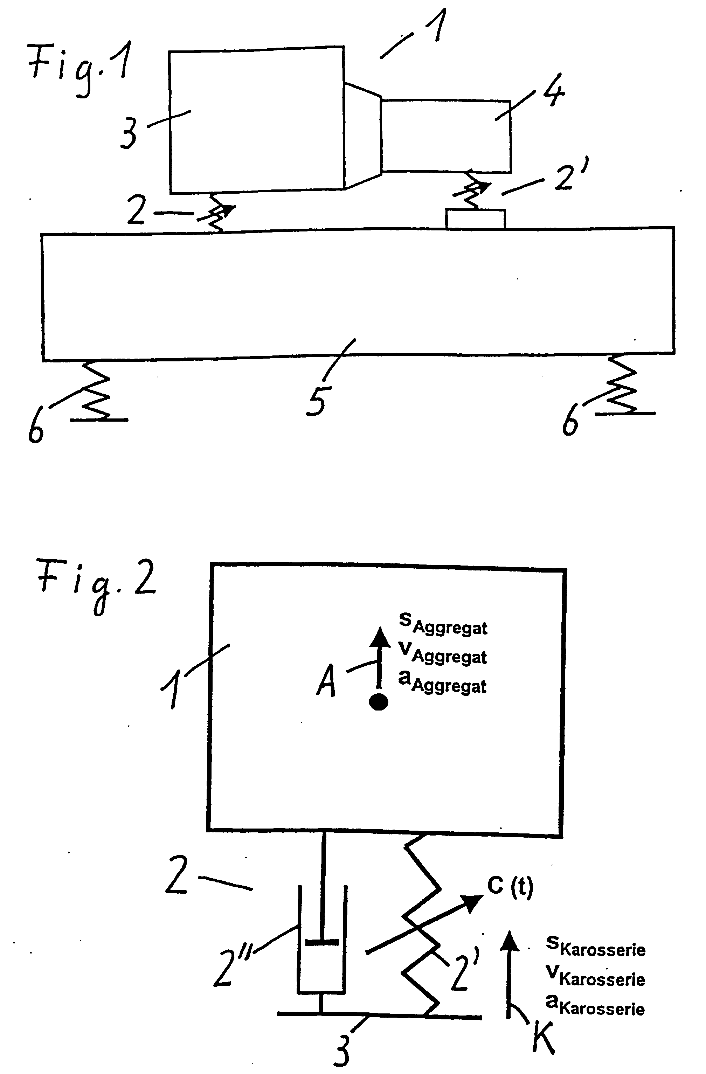

Figur 1 zeigt die Lagerung eines Antriebsaggregates 1, das sich aus einem Motor 3 und einem Getriebe 4 zusammensetzt. Das Antriebsaggregat 1 ist über Aggregatlager 2 und 2' gegenüber einer Karosserie 5 gelagert. Die Karosserie 5 ist ihrerseits über Federn 6 und nicht gezeichneten Dämpfern an nicht gezeichneten Rädern abgestützt. Die Aggregatlager 2, 2' weisen eine veränderliche Federrate auf.

Figur 2 zeigt ein Aggregat 1, das über ein Lager 2, bestehend aus einem Dämpfer 2" und einer Feder 2' mit einer über die Zeit t veränderlichen Federrate c an eine Umgebung 3 angebunden ist. Das Aggregat 1 kann aufgrund der Nachgiebigkeit des Lagers 2 in Richtung des Pfeils A Bewegungen ausführen, die sich durch einen Weg s oder eine Geschwindigkeit v oder eine Beschleunigung a darstellen lassen. Das Aggregat 1, beispielsweise die Brennkraftmaschine eines Kraftfahrzeuges, schwingt periodisch, ebenso wie die Umgebung 3, beispielsweise die Karosserie eines Kraftfahrzeuges, die in Richtung des Pfeils K Bewegungen ausführt, die sich auch durch einen Weg s oder eine Geschwindigkeit v oder eine Beschleunigung a darstellen lassen.

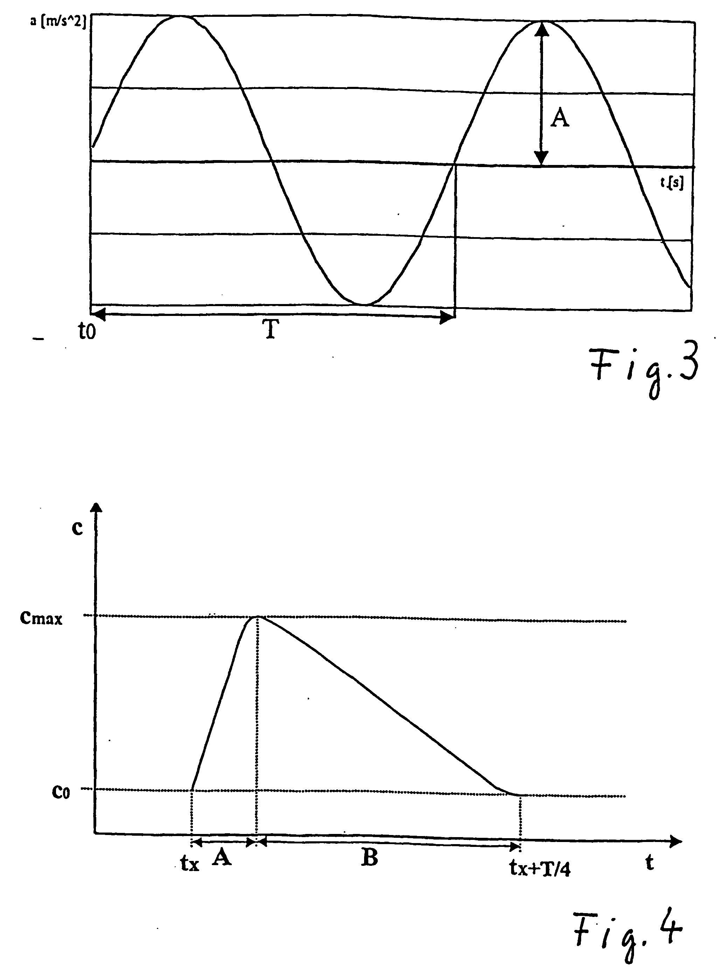

In Figur 3 ist der Verlauf einer Beschleunigung a des Aggregats 1 über die Zeit t dargestellt. Das Aggregat 1 macht eine Schwingbewegung mit der Amplitude A und der Schwingzeit T. Hierbei handelt es sich um eine Schwingung mit der Eigenfrequenz f=1/T des Systems aus Aggregat 1 und elastischer Lagerung 2. Die Beschleunigung a(t) des Aggregats 1 wird ständig durch Messung erfasst und daraus werden die folgenden Größen bestimmt bzw. errechnet:
Frequenz f bzw. Schwingzeit T=1/f
Zeitpunkte des Nulldurchganges des Schwingweges tₓ = t₀ +n*T/2 aktuelle Amplitude A von Weg oder Beschleunigung

Aus diesen Größen wird dann der ideale Steifigkeitsverlauf der Lagerung 2 und das Abschaltkriterium A_{G2} berechnet und zum nächsten Nulldurchgang durch die Regelung umgesetzt. Durch ständigen Vergleich der aktuellen Amplitude A mit einem 2. Grenzwert A_{G2} wird der Zeitpunkt erfasst, an dem die periodische Steifigkeitsverstellung wieder eingestellt wird. Die Steifigkeitsrampe wird zu jedem tₓ aktiviert bis zur Erreichung des Abschaltkriteriums A_{G2}.

Figur 4 zeigt den prinzipiellen Verlauf der geregelten Lagersteifigkeit c über der Zeit t. Die Steifigkeitskurve in dem Zeitfenster T/4 setzt sich zusammen aus einem ab dem Zeitpunkt tₓ von der Grundsteifigkeit c₀ stetig bis zur maximalen Federrate cₘₐₓ anwachsenden Teil A und einem direkt anschließenden Teil B mit stetig bis auf den Wert c₀ abfallender Lagersteifigkeit c(t).

Hierbei erfolgt der Steifigkeitszuwachs (Bereich A) so schnell wie technisch möglich, vorzugsweise wird die maximale Federrate cₘₐₓ innerhalb einer Zeit von höchstens 10 ms erreicht. Der nach Erreichen des Maximums einsetzende Steifigkeitsabfall (Bereich B) erfolgt möglichst kontinuierlich und so, dass die Basissteifigkeit c₀ möglichst nahe, bzw. idealerweise exakt zum Zeitpunkt tx + T/4 wieder erreicht wird. Bei diesem Verfahren wird der erforderliche Steifigkeitsverlauf für die gesteuerte periodische Steifigkeitsänderung des Aggregatlagers, wie dargestellt, aus den Schwingungsparametem Frequenz bzw. Schwingzeit, Amplitude und gegebenenfalls dem Nulldurchgang, der Phase, ermittelt.

## Patentansprüche

1. Verfahren zur Steuerung eines Aggregatlagers (2,2'), dessen Federrate (c) vorrangig auf die Isolation der von einem Aggregat (1) erzeugten Schwingungen abgestimmt ist, mit einer Einrichtung zur Veränderung der Federrate (c) zur Verhinderung des Einschwingens einer niederfrequenten Eigenschwingung des Aggregats (1), **dadurch gekennzeichnet, dass** die Federrate (c) während einer bestimmten Zeitdauer, die einem Viertel (T/4) der Schwingungsdauer (T₀) der Eigenschwingung des Aggregates (1) entspricht, so verändert wird, dass die Lagersteifigkeit, innerhalb von höchstens zehn Millisekunden, von einer Grundsteifigkeit mit einer bestimmten Federrate (c₀) stetig bis zu einer Maximalsteifigkeit mit einer maximalen Federrate (cₘₐₓ) ansteigt und anschließend stetig so abfällt, dass die Grundsteifigkeit mit der bestimmten Federrate (c₀) nach der bestimmten Zeitdauer (T/4) erreicht wird, wobei der Zeitpunkt an dem die Veränderung der Federrate (c) beginnt, einem Nulldurchgang der niederfrequenten Eigenschwingung entspricht.

2. Verfahren nach Anspruch 1, **dadurch gekennzeichnet, dass** die Veränderung Federrate (c) bezogen auf den niederfrequenten Eigenschwingungsverlauf periodisch oder stochastisch wiederholt wird.

3. Verfahren nach einem der vorhergehenden Ansprüche, **dadurch gekennzeichnet, dass** dieses beim Auftreten von niederfrequenten Eigenschwingungen des Aggregates (1), von denen mindestens eine einen vorgegebenen Grenzwert überschreitet, aktiviert wird und deaktiviert wird, wenn alle niederfrequenten Eigenschwingungen des Aggregates (1) einen weiteren vorgegebenen Grenzwert unterschreiten.

4. Verfahren nach einem der vorhergehenden Ansprüche zur Verhinderung des Einschwingens einer niederfrequenten Eigenschwingung (Stuckerschwingung) des Antriebsaggregates (1) eines Kraftfahrzeuges.

## Claims

1. A method for controlling a unit bearing (2, 2') the spring rate (c) of which is matched primarily to the insulation of the vibrations generated by a unit (1), comprising a device for changing the spring rate (c) to prevent the transient effect of a low-frequency natural vibration of the unit (1), **characterised in that** the spring rate (c) is changed for a specific time period, which corresponds to a quarter (T/4) of the vibration duration (To) of the natural vibration of the unit (1) such that the bearing rigidity increases continuously within at most 10 milliseconds, from a base rigidity with a specific spring rate (c₀) to a maximum rigidity with a maximum spring rate (cₘₐₓ) and then falls continuously such that the base rigidity with the specific spring rate (c₀) is achieved after a specific time period (T/4), wherein the instant at which the change in the spring rate (c) begins, corresponds to a zero crossing of the low-frequency natural vibration.

2. A method according to claim 1, **characterised in that** the change in the spring rate (c) in relation to the low-frequency natural vibration course is repeated periodically or stochastically.

3. A method according to any one of the preceding claims, **characterised in that** when low-frequency natural vibrations of the unit (1) occur, of which at least one exceeds a predetermined limit value, this is activated and deactivated when all low-frequency natural vibrations of the unit (1) fall below a further predetermined limit value.

4. A method according to any one of the preceding claims for preventing the transient effect of a low-frequency natural vibration (Stucker vibration) of the drive unit (1) of a motor vehicle.

## Revendications

1. Procédé de commande d'un support d'unité (2, 2') dont la raideur (c) se détermine principalement en fonction de l'isolation des oscillations générées par une unité (1), comportant une installation pour modifier la raideur (c) et éviter l'oscillation propre à basse fréquence de l'unité (1),
**caractérisé en ce qu'**
on modifie la raideur (c) pendant une durée déterminée qui correspond à un quart (T/4) de la période (Tₒ) de l'oscillation propre de l'unité (1) pour que la rigidité du support augmente en continu jusqu'à une rigidité maximale correspondant à une raideur maximale (cₘₐₓ) au plus pendant dix millisecondes en partant d'une rigidité de base correspondant à une certaine raideur (cₒ) et ensuite on diminue en continu pour atteindre la rigidité de base correspondant à une raideur définie (co) après une durée définie (T/4),
l'instant auquel commence la variation de raideur (c) étant celle d'un passage à zéro de l'oscillation basse fréquence.

2. Procédé selon la revendication 1,
**caractérisé en ce qu'**
on répète la variation de la raideur (c) rapportée à la courbe d'oscillation propre basse fréquence, par une répétition périodique ou aléatoire.

3. Procédé selon l'une quelconque des revendications précédentes,
**caractérisé en ce qu'**
il est activé lorsque des oscillations propres basse fréquence de l'unité (1) dépassent une valeur limite prédéfinie et on neutralise lorsque toutes les oscillations propres basse fréquence de l'unité (1) passent en dessous d'une valeur limite prédéfinie.

4. Procédé selon l'une quelconque des revendications précédentes, pour éviter l'oscillation propre basse fréquence de l'unité motrice (1) d'un véhicule automobile (oscillation de Stucker).
